(19) Europäisches Patentamt
European Patent Office
Office européen des brevets

(11) **EP 3 786 586 B1**

(12) **EUROPEAN PATENT SPECIFICATION**

(45) Date of publication and mention
of the grant of the patent:
**13.12.2023 Bulletin 2023/50**

(21) Application number: **20186617.5**

(22) Date of filing: **20.07.2020**

(51) International Patent Classification (IPC):
*G01C 21/34* (2006.01)   *G01C 21/36* (2006.01)
*B60W 30/06* (2006.01)   *B60W 30/095* (2012.01)
*G08G 1/16* (2006.01)   *G05D 1/02* (2020.01)

(52) Cooperative Patent Classification (CPC):
**G01C 21/3602; B60W 30/06; B60W 30/0953;
B60W 60/001; B62D 15/025; B62D 15/0285;
G01C 21/3407; G01C 21/3446; G01C 21/3685;
G05D 1/0217; G08G 1/168;** B60W 2520/20;
G05D 2201/0213

(54) **PATH PLANNING FOR AUTONOMOUS AND SEMI-AUTONOMOUS VEHICLES**

WEGPLANUNG FÜR AUTONOME UND HALBAUTONOME FAHRZEUGE

PLANIFICATION DE TRAJECTOIRE POUR VÉHICULES AUTONOMES ET SEMI-AUTONOMES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.08.2019 US 201916553901**

(43) Date of publication of application:
**03.03.2021 Bulletin 2021/09**

(73) Proprietor: **Zenuity AB
413 46 Göteborg (SE)**

(72) Inventors:
• **MATSUDA, Takuro
Farmington Hills, MI 48335 (US)**
• **XHANG, Xingzhong
Southfield, MI 48076 (US)**

(74) Representative: **Zacco Sweden AB
P.O. Box 5581
Löjtnantsgatan 21
114 85 Stockholm (SE)**

(56) References cited:
WO-A1-2019/043833    US-A1- 2018 356 819
US-A1- 2019 011 910    US-B1- 9 969 386

**Description**

TECHNICAL FIELD

The present disclosure relates to autonomous driving (AD) and advanced driver-assistance systems (ADAS). More specifically, the present disclosure relates to path planning for a vehicle within a drivable area.

BACKGROUND

Today, many vehicles have a variety of driver support functions in the form of advanced driver assistance systems (ADAS). In addition, many of these support function form a basis for current and future autonomous drive (AD) functions. Examples of ADAS features or functions include lane departure warning systems, lane centring, lane keeping aid, pilot assist, lane change assistance, parking sensors, pedestrian protection systems, blind spot monitors, adaptive cruise control (ACC), anti-lock braking systems, and so forth. These functions supplement the traditional driver control of the vehicle with one or more warnings or automated actions in response to certain scenarios.

During these last few years, the development of autonomous vehicles has exploded and many different solutions are being explored. Today, development is ongoing in both autonomous driving (AD) and advanced driver-assistance systems (ADAS), i.e. semiautonomous driving, within a number of different technical areas within these fields. One such area is path planning, i.e. how to plan a path so that the vehicle can be manoeuvred safely with accuracy and consistency in a comfortable manner for the vehicle occupants, i.e. path or trajectory planning.

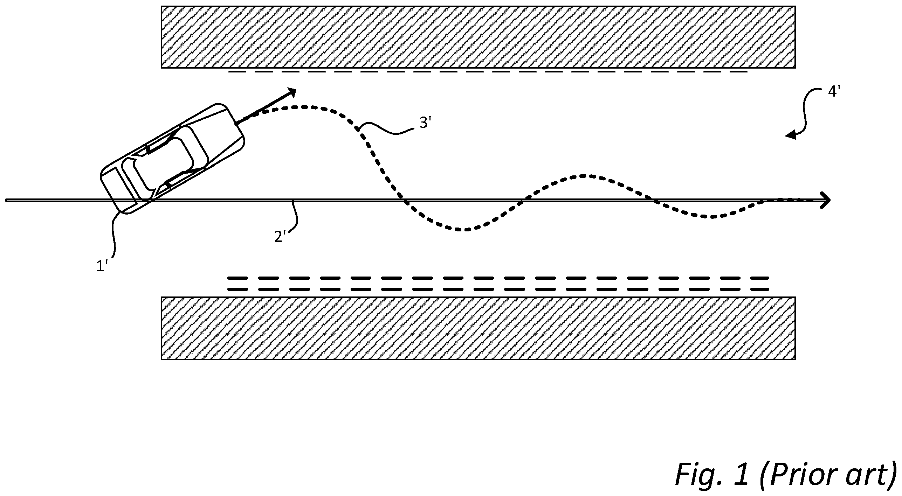

In general, conventional path planning system generates a target path for an autonomous vehicle from a given drivable area that is typically provided by a perception system or module. The target path is assumed to be sent to a vehicle controller that computes steering angles and such that the vehicle follows the path. A schematic illustration of a conventional path planning solution is illustrated in Fig. 1. A path planning module of the vehicle generates a target path 2' for the vehicle 1'. The initial vehicle position is however distant from the generated target path 2' which results in rough vehicle motion (as indicated by the broken arrow 3') because the path tracking controller commands steering angle so to converge to the target path 2'. The roughness of the motion 3' may be traced back to two phases. Firstly, immediately after automation is activated, a large steering angle is commanded, and secondly, after reaching to the path 2', the vehicle 1' overshoots the path 2', instead of converging to the path 2' because of the large heading angle that has been already grown at the previous phase. Consequently, the vehicle motion 3' experiences such overshoots several times until it fully converges to the path 2'. In some cases where initial vehicle offset is very large, the amplitude of overshoots may grow over time, and the vehicle 1' consequently fails to converge to the path 2'. This may be a problem in for example an automated valet parking application, where a user parks the vehicle at an arbitrary pose before starting the automated parking, but the target path is optimized around the centre of drivable area.

US 2018/356819 A1 discloses autonomous vehicle driving systems and methods for critical conditions. In more detail, the disclosed method for autonomously operating a vehicle includes receiving vehicle state data and vehicle object environment data, and generating an "optimal path" for the vehicle with a cost function based on the received data. Furthermore, the method includes identifying at least one "critical condition constraint" and modifying at least a portion of the "optimal path" based on the at least one critical condition constraint to result in a short-range trajectory portion.

US 9,969,386 B1 discloses a method and a system for an automated parking. The system determines, using the geometry of the vehicle and the map of the parking space, a collision free geometric path connecting an initial state of the vehicle with a target state of parked vehicle through a set of waypoints and determines, using a kinematic model of the vehicle, a set of kinematic subgraphs forming a kinematic graph having multiple nodes connected with kinematic edges.

WO 2019/043833 A1 discloses a method for bringing host vehicle position closer to the center within a lane after the host vehicle has passed through an intersection through a left or right turn, even for intersections having no white lines or pedestrian crossing zones.

US 2019/011910 A1 discloses a system for assisting with operating a driverless vehicle according to a path within virtual boundaries of a driving corridor.

Even though currently know solutions may produce adequate results in terms of safe path planning, there is always a need for improvements in the art, particularly improvements in terms of comfort and overall user experience.

SUMMARY

It is therefore an object of the present disclosure to provide a method for path planning for an autonomous or semi-autonomous vehicle, a computer-readable storage medium, a control device, and a vehicle comprising such a control device which alleviates all or at least some of the drawbacks of currently known solutions.

This object is achieved by means of a method for path planning for an autonomous or semi-autonomous vehicle, a computer-readable storage medium, a control device, and a vehicle comprising such a control device as defined in the appended claims.

According to a first aspect of the present disclosure, there is provided a method for path planning for an autonomous or semi-autonomous vehicle, according to claim 1. The method comprises obtaining a drivable area of a surrounding environment of the vehicle, and generating a path within the drivable area for a time step t based on a predefined set of characteristics for the path and a predefined set of constraints. The predefined set of constraints comprise at least one constraint based on a current pose of the vehicle.

The presented method enables for smoother and more stable path planning modules for autonomous and semi-autonomous vehicles as compared to conventional solutions. More specifically, the proposed method mitigates the risk of failed trajectory to path convergence in scenarios where the initial pose of the vehicle deviates from the target path, such as e.g. in automated valet parking applications.

Further, the present inventors realized that by forming a constraint dependent on the current pose of the vehicle when generating a target path for a vehicle, the risk of failing to converge to the generated path due to non-optimal initial vehicle position is reduced. In particular the present inventors realized that by having a constraint in the form of two lateral boundaries extending a predefined length in front of the vehicle at a predefined distance from a vehicle longitudinal centre axis, a simple and computationally efficient path optimization may be realized.

The step of generating a path within the drivable area for the time step t comprises the following:

- computing a cost function, where the cost function is a mathematical representation of the predefined set of characteristics for the path,
- computing the set of constraints, wherein the set of constraints further comprise at least one constraint based on a boundary of the drivable area and at least one constraint based on vehicle characteristics,
- solving an optimization problem based on the computed cost function and the computed set of constraints,
- forming the path based on the solved optimization problem.

Stated differently, the path planning is formed as a quadratic programming problem. Accordingly, by using this formulation it is possible to derive the globally optimal solution in real time with efficient but conventional optimization algorithms.

The vehicle has a longitudinal axis intersecting a predefined centre point of the vehicle, and the at least one constraint based on the current pose of the vehicle comprises two lateral boundaries extending in parallel with the longitudinal axis of the vehicle at a first predefined lateral distance from the longitudinal axis. The predefined centre point of the vehicle may be construed as a reference point based on which path tracking control is conducted (e.g. center of real axle of center of vehicle mass). The lateral boundaries provide for a simple yet efficient means to impose a constraint that is related to the vehicle pose in path planning applications.

An area between the two lateral boundaries defines an allowable area within which at least a portion of the path for time step t is allowed to be formed.

According to a second aspect of the present disclosure, there is provided a (non-tranistory) computer-readable storage medium storing one or more programs configured to be executed by one or more processors of a vehicle control system, the one or more programs comprising instructions for performing the method according to any one of the embodiments disclosed herein. With this aspect of the disclosure, similar advantages and preferred features are present as in the previously discussed first aspect of the disclosure.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

Further, in accordance with a third aspect of the present disclosure, there is provided a control device for path planning for an autonomous or semi-autonomous vehicle, according to claim 6. The control device comprises control circuitry (may also be referred to as one or more processors) and associated memory devices. The control circuitry is configured to obtain a drivable area of a surrounding environment of the vehicle, and generate a path within the drivable area for a time step t based on a predefined set of characteristics for the path, and a predefined set of constraints. Moreover, the predefined set of constraints comprises at least one constraint based on a current pose of the vehicle.

With this aspect of the disclosure, similar advantages and preferred features are present as in the previously discussed first aspect of the disclosure. According to a fourth aspect of the present disclosure, there is provided a vehicle comprising a perception system comprising at least one sensor for monitoring a surrounding environment of the vehicle. The vehicle further comprises a control device according to any one of the embodiments disclosed herein. With this aspect of the disclosure, similar advantages and preferred features are present as in the previously discussed first aspect of the disclosure.

Further embodiments of the disclosure are defined in the dependent claims.

These and other features and advantages of the present disclosure will in the following be further clarified with reference to the embodiments described hereinafter.

BRIEF DESCRIPTION OF THE DRAWINGS

Further objects, features and advantages of embodiments of the disclosure will appear from the following detailed description, reference being made to the accompanying drawings, in which:

Fig. 1 is a schematic top view illustration of a vehicle traveling on a road segment according to a prior art example.

Fig. 2 is a schematic top view illustration of a vehicle having a control device for path planning according to an exemplary embodiment of the present disclosure.

Figs. 3a-3b are schematic top view illustration of a vehicle having a control device for path planning for a valet parking application according to an exemplary embodiment of the present disclosure.

Figs. 3c-3d are schematic top view illustration of a vehicle having a valet parking application according to a prior art example.

Fig. 4 is a schematic block diagram representation of a method for path planning for an autonomous or semi-autonomous vehicle in accordance with an embodiment of the present disclosure.

Fig. 5 is a schematic flow chart representation of a method for path planning for an autonomous or semi-autonomous vehicle in accordance with an embodiment of the present disclosure.

Fig. 6 is a schematic side view of a vehicle having a control device for path planning for an autonomous or semi-autonomous vehicle in accordance with an embodiment of the present disclosure.

DETAILED DESCRIPTION

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or similar components. A vehicle is in the present context to be understood as a road vehicle such as a car, a bus, a truck, construction vehicles, and the like.

In general, there are two major approaches to a path planning problem. The first being a sample based approach where drivable area is discretized into a number of cells or nodes. Target path is found by conducting a type of graph-based search from start to end regions. The other approach is to solve an optimization problem with a cost function and a set of constraints. The cost function represents the characteristics that users desire for the path, and the constraints include the limitation of drivable area within which the path is allowed to exist. Accordingly, the optimal path is found as the one that minimizes the cost function. The present disclosure is particularly related to the latter approach.

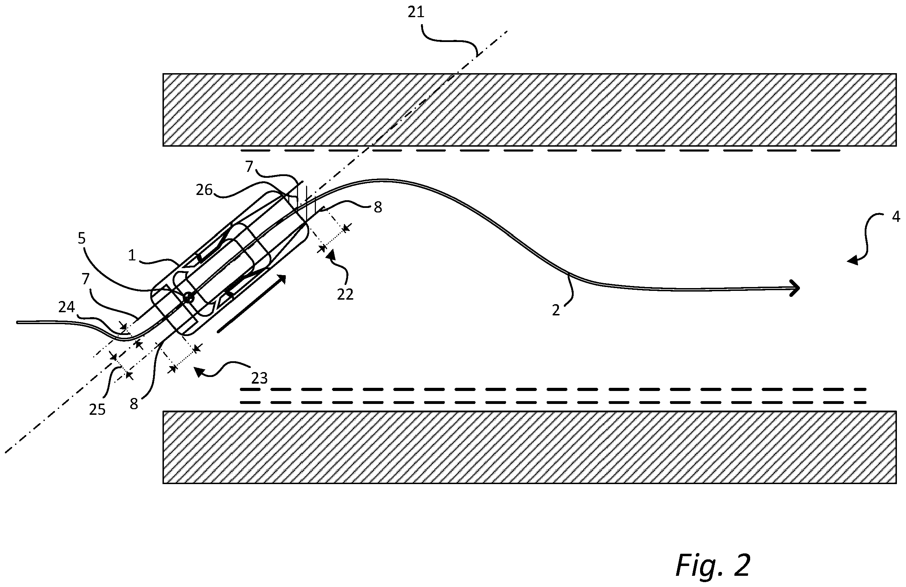

Fig. 2 is a schematic top view illustration of a vehicle 1 traveling on a road segment 4, here in the form of a lane on a road, in accordance with an exemplary embodiment of the present disclosure. Moreover, Fig. 2 serves to at least generally elucidate a method or process for path planning for an autonomous or semi-autonomous vehicle according to an exemplary embodiment of the present disclosure. Thus, the illustrated vehicle 1 is to be interpreted as an autonomous vehicle or a semi-autonomous vehicle (i.e. a vehicle equipped with suitable advanced driver-assistance systems) having a control device for path planning according to an exemplary embodiment of the present disclosure. A path may in the present context to be a sequence of vehicle configurations beginning and ending with boundary configurations. These boundary configurations can also referred to as initial and terminating. In other words, a planned path can be understood as a series of positions or configurations that are planned to be assumed by the vehicle 1 within a drivable area.

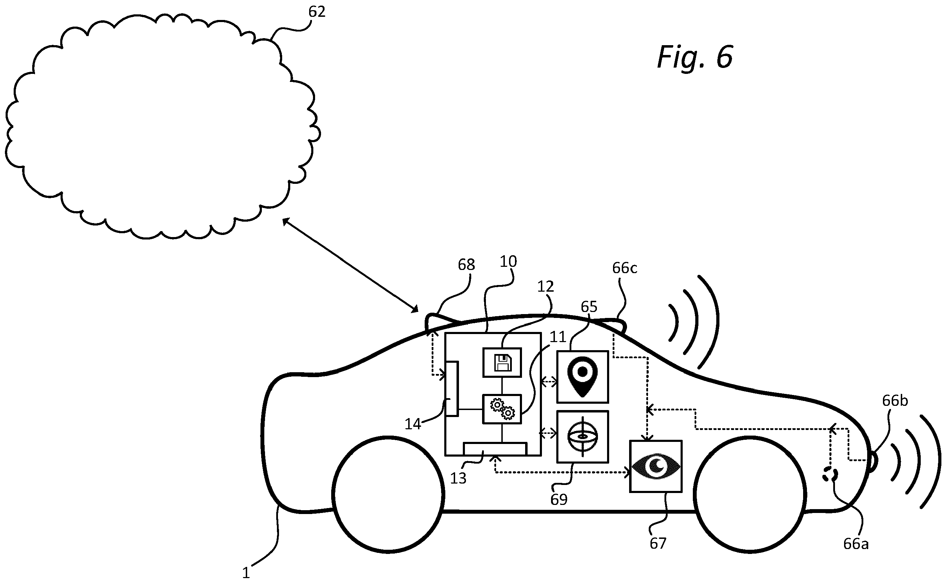

It is assumed that the path planning system that generates target path 2 for the vehicle 1 from a given drivable area that is typically provided by perception module (see e.g. reference 67 in Fig. 6). The target path 2 is assumed to be sent to a vehicle controller that computes steering angles and acceleration values such that the vehicle 1 follows the generated path 2. A perception system is in the present context to be understood as a system responsible for acquiring raw sensor data from on sensors such as cameras, LIDARs and RADARs, ultrasonic sensors, and converting this raw data into scene understanding. Naturally, the drivable area may be determined by additional means such as high definition (HD) map data, location data acquired from a localization system (e.g. a GNSS), and so forth.

Furthermore, in Fig. 2 the vehicle 1 is assumed to have a pose (i.e. geographical position and heading angle) which is distant from the target path (i.e. centre of the lane). In the illustrated the vehicle 1 is assumed to be at stand-still whereupon a target path is generated to move the vehicle 1 to the centre of the lane 4.

The path planning module (i.e. control device) of the vehicle 1 obtains a drivable area of the surrounding environment. The drivable area may for example be one or more lanes of the road.

Then, a path 2 is generated within the drivable area with a predefined sample rate. If the sample rate is for example 10 Hz, then the path 2 generating module updates the target path every 0.1 seconds.

In more detail, a path 2 is generated for a time step t based on a predefined set of characteristics for the path and further based on a predefined set of constraints, where the predefined set of constraints comprise at least one constraint 7,8 based (dependent) on a current pose of the vehicle. The current pose of the vehicle may for example be retrieved from an auxiliary vehicle control unit such as a localization system (e.g. GNSS), an inertial measurement unit (IMU), or any other suitable sensor devices. The predefined set of characteristics can be construed as control parameters imposed in order to generate a smooth path without unnecessary hard accelerations or jerk, i.e. criteria that are more related to user experience than physical vehicle constraints. The predefined set of characteristics may for example comprise at least one of a path smoothness level, a distance to lane centre, and a length of the path. The predefined set of constraints may on the other hand further comprise at least one of a minimum turning radius of the vehicle 1, a (longitudinal) length of the vehicle 1, a (lateral) width of the vehicle 1, a (vertical) height of the vehicle 1, a ground clearance of the vehicle 1, and at least one drivable area boundary. A set is in the present context to be interpreted as a number equal to or greater than one.

In reference to the drivable area boundary constraint(s), it should be interpreted as that the vehicle is not allowed to drive onto an area not suitable for driving (e.g. grass, pedestrian sidewalk, etc.). Naturally, the set of constraints may further comprise other constraints such as collision avoidance with external objects (e.g. other vehicles, road signs, pedestrians, etc.).

Further, the at least one constraint based on the current pose (position and heading angle) of the vehicle comprises two (virtual) lateral boundaries 7, 8 extending from the vehicle 1 in in a direction of travel of the vehicle 1 (indicated by the arrow running along the vehicle 1). The example embodiment depicted in Fig. 2 does however include lateral boundaries 7, 8 extending both from the front and the back of the vehicle 1. In more detail, the area 26 between the two lateral boundaries define an allowable area 26 within which at least a portion of the path for time step t is allowed to be formed.

The lateral boundaries 7, 8 extend in parallel with a longitudinal centre axis 21 of the vehicle 1. The longitudinal centre axis is a virtual axis extending through a centre point 5 of the rear axle along a length of the vehicle 1. Moreover, the lateral boundaries 7, 8 are arranged at a predefined lateral distance 24, 25 from the longitudinal centre axis 21 of the vehicle 1. The lateral boundaries 7, 8 may be equidistantly spaced away from the centre axis 21. Alternatively, a first lateral boundary 7 may be arranged at a first lateral distance 24 from the longitudinal centre axis 21 and a second lateral boundary 8 may be arranged at a second lateral distance 24 from the longitudinal centre axis 21, the first and second distances being different. The spacing between the lateral boundaries 7, 8 and the longitudinal centre axis 21 may be dependent on external factors such as e.g. a geographical position of the vehicle 1, a predefined user preference, and so forth.

Further, the distance 24, 25 between the longitudinal centre axis 21 of the vehicle 1 and the lateral boundaries 7, 8 may be dynamic. More specifically, if the portion of the path 2 for time step t cannot be formed within the allowable area between the two lateral boundaries 7, 8, the distance 24, 25 can be increased up until a predefined maximum distance or until the portion of the path can be formed within the allowable area.

Further, the set of constraints, upon which the updated path is based, may further comprise at least one of a minimum turning radius of the vehicle, a (longitudinal) length of the vehicle, a (lateral) width of the vehicle, a (vertical) height of the vehicle, and a ground clearance of the vehicle. In other words, the updated path is preferably such that it does not violate the physical capabilities of the vehicle 1.

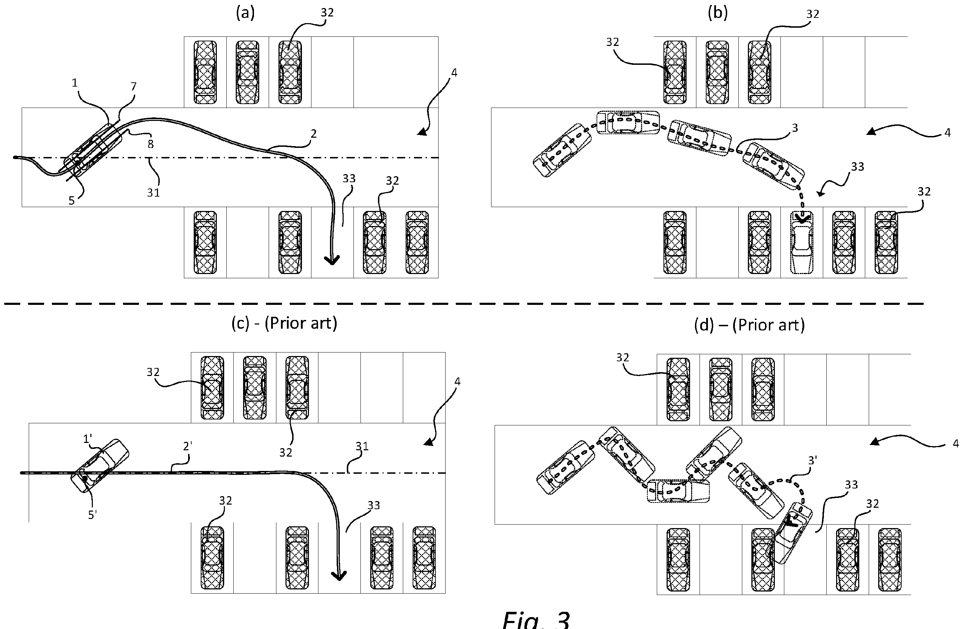

Accordingly, the generated path 2 will take into account a current pose of the vehicle 1, which will render in a smoother path with a higher chance of the subsequent vehicle trajectory converging with the generated path 2, thereby improving stability and comfort. In other words, by introducing this constraint (lateral boundaries 7, 8), the generated target path 2 aligns with vehicle pose. Thus, when it is tracked by a controller, smooth vehicle motion can be realized. This insight will be further elucidated with reference to Figs. 3a - 3d which show a comparison between the proposed path planning solution according to an embodiment of the present disclosure and a conventional path planning system in a valet parking application.

Fig. 3a is a schematic top view illustration of vehicle 1 having a control device for path planning according to an exemplary embodiment of the present disclosure, and Fig. 3b shows the vehicle trajectory 3 during path convergence. The vehicle 1 is located in a parking lot 4, and the path planning system is configured to generate a path 2 in order to park the vehicle in a designated parking spot 33 in a safe and comfortable manner. Figs. 3c and 3d are comparative top view illustration of a vehicle 1' having a conventional path planning solution, where Fig. 3c shows the generated path 2', and Fig. 3d shows the vehicle trajectory 3' during path convergence in the parking lot 4'.

Due the constraint imposed by the lateral boundaries 7, 8 the generated path 2 aligns with the vehicle pose. Thus, when it is subsequently tracked by a vehicle controller (illustrated by the trajectory 3 in Fig. 3b), smooth vehicle motion can be realized. Further constraints may be imposed on the path, such as a minimum distance to external objects, here in the form of parked vehicles 32. Figs. 3c - 3d show a generated path 2' and vehicle trajectory 3' the constraint imposed by the lateral boundaries, i.e. without accounting for the vehicle pose. The generated path 2' is instead optimized around the centre 31' of the drivable area 4. Since the initial vehicle offset (difference between vehicle pose and target path 2') is large in the prior art example, the controller tends to overshoot the path 2', and moreover since the length of the target path 2' is relatively short path convergence may fail (as indicated in Fig. 3d).

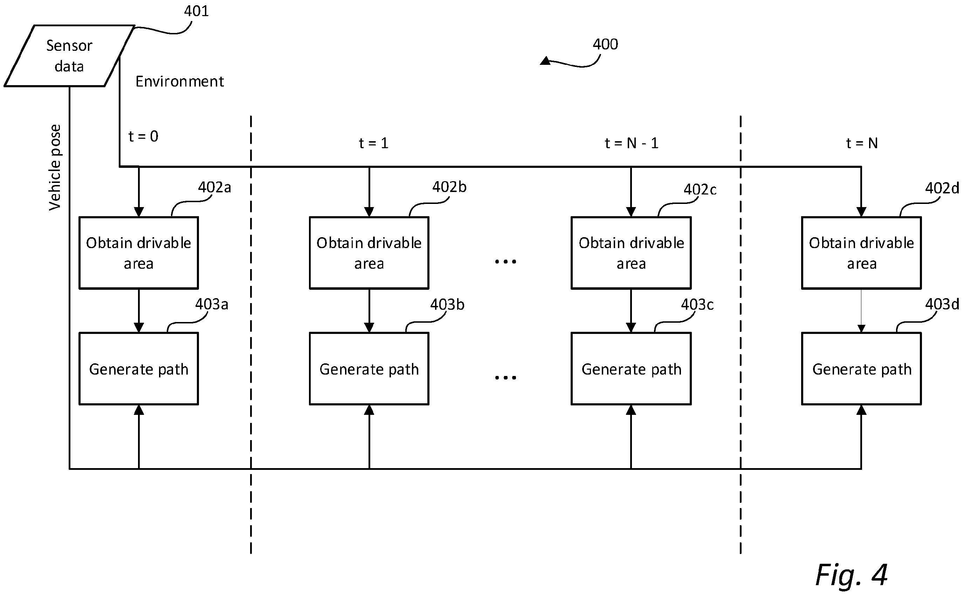

Fig. 4 is a schematic block diagram 400 representation of a method for path planning for an autonomous or semi-autonomous vehicle according to an exemplary embodiment of the present disclosure. The block diagram 400 illustrates how the path generated/updated at each time step $t = k$, $k = [1, 2 ... N]$ depends on the vehicle pose at each time step $t = k$. The method comprises obtaining 402a-d a drivable area of a surrounding environment of the vehicle. The term obtaining is herein to be interpreted broadly and encompasses receiving, retrieving, collecting, acquiring, and so forth.

The drivable area is determined based on sensor data 401 retrieved from one or more sensor devices arranged to monitor a surrounding environment of the vehicle. As mentioned the drivable area may comprise one or more lanes of a road segment, a parking lot, a one way street, and so forth. Further, the method comprises generating 403a-d a path within the drivable area for each time step $t = k$ based on a predefined set of characteristics for the path and a predefined set of constraints. As mentioned, the predefined characteristics for the path are more related to comfort aspects (lane smoothness, distance to other objects, distance to boundaries, distance to lane centre, etc.), i.e. the characteristics can be understood as optimization parameters. Moreover, the characteristics may be dynamic (i.e. dependent on a current user setting, time of day, etc.). The constraints are one the other hand more related to limitations such as physical limitations of the vehicle (e.g. turning radius), safety (e.g. traffic monitoring for collision avoidance), and in particular to the limitations imposed by the current pose of the vehicle as described in the foregoing.

The constraints may to some extent be construed as static limitations which should not be violated (e.g. the vehicle cannot turn harder than its minimum turning radius, or the vehicle cannot pass through an area more narrow than the width of the vehicle). However, in some exemplary embodiments, the constraint based on the current pose of the vehicle is a soft constraint, i.e. it may be violated if one or more other predefined criteria are fulfilled (e.g. to avoid collision). In other words, the updated path for time step t may in some predefined scenarios be allowed to be formed outside of the lateral boundaries (ref. 7, 8 in Fig. 2).

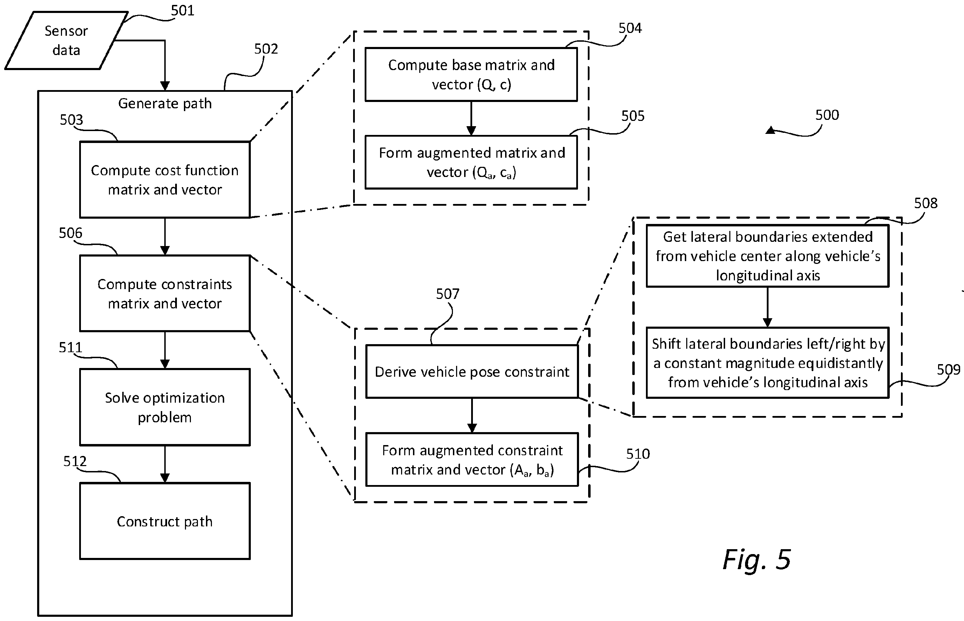

Fig. 5 is a schematic flow chart representation of a method 500 for path planning for an autonomous or semi-autonomous vehicle in accordance with an embodiment of the present disclosure. The following description will focus on the path generation step 502, however, as already exemplified in the foregoing the path can be said to be generated at least partly based on sensor data 501 that for example can be provided by a perception system of the vehicle.

Moving on, the path generation 502 is approached as an optimization problem with a cost function and a set of constraints. The cost function represents the characteristics that users desire for the path, and the constraints include the limitation of drivable area within which the path is allowed to exist. The optimal path is then found as the one that minimizes the cost function.

In many cases, and in practical implementations, the problem is formulated as a quadratic programming problem:

Minimizing cost function:

$$J = \min_{w}[w^T Q w + c^T w] \qquad (1)$$

Subject to constraints:

$$Aw \leq b \qquad\qquad (2)$$

where w is the parameter vector to be optimized, Q is a weight matrix, c is a weight vector, A is a constraints matrix, and b is a constraints vector.

The parameter vector determines the shape of the target path. For example, when the path is modeled by polynomial, the vector is polynomial coefficients. An advantage of this type of approach is that the optimal solution can be found in real time with efficient algorithms. An example of a specific implementation of a quadratic programming problem will be discussed in reference to Fig. 5 in the following.

In order to add the constraint based on the current pose of the vehicle, a modification is made to the formulation of the above mentioned optimization problem. More specifically, the equations (1), (2) are updated:

$$J = \min_{w_a}[w_a^T Q_a w_a + c_a^T w_a] \qquad\qquad (3)$$

$$A_a w_a \leq b_a \qquad\qquad (4)$$

where $w_a$ is the parameter vector to be optimized, and that is augmented from w in equations (1) and (2):

$$w_a = \begin{bmatrix} w \\ \varepsilon \end{bmatrix} \qquad\qquad (5)$$

$Q_a$ is the augmented cost matrix and $c_a$ is the augmented cost vector from Q and c in equation (1), respectively:

$$Q_a = \begin{bmatrix} Q & 0 \\ 0 & 0 \end{bmatrix}, c_a = \begin{bmatrix} c \\ \rho \end{bmatrix} \qquad\qquad (6)$$

where $\rho$ is the weight on the (soft) constraint based on the current pose of the vehicle. $A_a$ is the augmented constraint matrix and $b_a$ augmented constraint vector from A, and b in equation (2), respectively:

$$A_a = \begin{bmatrix} A & -E \\ 0 & -1 \end{bmatrix}, b_a = \begin{bmatrix} b \\ 0 \end{bmatrix} \qquad\qquad (6)$$

Moving on, the method 500 comprises computing 503 the cost function matrix and cost function vector. In the present context the cost function can be understood as a mathematical representation of desired characteristics of a target path. Such characteristics may for example be a specific "smoothness" of the path, closeness to lane centre, overall length of the path, and so forth. The cost function values are numerically computed in a discrete space (ortime) in order to compute a matrix Q and a vector c for the above mentioned Quadratic Programming problem.

In more detail, the step of computing 503 the cost function matrix and vector comprises computing 504 the "base" matrix and vector (Q, c) and then forming the augmented matrix and vector ($Q_a$, $c_a$).

Further, the method comprises computing 506 the set of constraints, where the set of constraints further comprise at least one constraint based on a boundary of the drivable area and at least one constraint based on vehicle characteristics. More specifically, a constraints matrix and constraints vector are computed 506. Some constraints are derived from drivable area boundaries in order to ensure that optimized path exists within the drivable area (e.g. within a parking lot and allowable lanes within the parking lot). Additionally, one may require the curvature of the path to be below a certain threshold (e.g. minimum turning radius of vehicle).

Still further, the step of computing 506 the constraints matrix and vector, further comprises deriving 507 the at least one constraint based on a current vehicle pose. This constraint may also be referred to as the lateral boundaries 7, 8 illustrated in for example Fig. 2. Thus, the method 500 further comprises obtaining or forming 508 lateral boundaries based on the current pose of the vehicle 1. In other words, generating/obtaining a narrow constraint that extends from vehicle's longitudinal centre axis past the front and back of the vehicle with a predefined length. Next, the lateral boundaries are shifted 509 to the left and right, respectively, by a predefined distance from the longitudinal centre axis of the vehicle.

Once the "pose" constraint is derived 507, an augmented constraints matrix and constraints vector ($A_a$, $b_a$) is

formed 510. Next, the optimization problem is solved 511. This may be understood as minimizing the cost function given the predefined set of characteristics and the predefined set of constraints. In more detail, this step 511 solves the quadratic programming problem discussed in the foregoing. For this task conventional algorithms that are efficient and numerically stable may be used.

Further, a target path is constructed 512 from the solution 511. Depending on the way the quadratic programming problem is formulated, the output of the optimization 511 may be a set of coefficients of polynomial, a sequence of control inputs to the ego vehicle motion model, or some weights to form a shape of the path. Once the path is generated 502 or constructed 512, the method 500 may comprise controlling the vehicle in order to execute the generated/constructed path.

Executable instructions for performing these functions are, optionally, included in a non-transitory computer-readable storage medium or other computer program product configured for execution by one or more processors.

Fig. 6 is a schematic side view of a vehicle having a control device 10 for path planning for an autonomous or semi-autonomous vehicle 1. The vehicle 1 further comprises a perception system 66, a localization system 65, and an inertial measurement unit 69 in communicative connection with the control device. A perception system 66 is in the present context to be understood as a system responsible for acquiring raw sensor data from on sensors 67a, 67b, 67c such as cameras, LIDARs and RADARs, ultrasonic sensors, and converting this raw data into scene understanding. The localization system 65 is configured to monitor a geographical position and heading of the vehicle, and may in the form of a Global Navigation Satellite System (GNSS), such as a GPS. However, the localization system may alternatively be realized as a Real Time Kinematics (RTK) GPS in order to improve accuracy. An inertial measurement unit (IMU) is to be understood as an electronic device that measures and reports a body's specific force, angular rate, and sometimes the orientation of the body, using a combination of accelerometers, gyroscopes, and sometimes magnetometers. Thus, the vehicle pose may be retrieved from any one or a combination of these peripheral systems 65, 67, 69.

The control device 10 comprises one or more processors 11, a memory 12, a sensor interface 13 and a communication interface 14. The processor(s) 11 may also be referred to as a control circuit 11 or control circuitry 11. The control circuit 11 is configured to execute instructions stored in the memory 12 to perform a method for path planning for an autonomous or semi-autonomous vehicle according to any one of the embodiments disclosed herein. Stated differently, the memory 12 of the control device 10 can include one or more (non-transitory) computer-readable storage mediums, for storing computer-executable instructions, which, when executed by one or more computer processors 11, for example, can cause the computer processors 11 to perform the techniques described herein. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices.

In more detail, the control circuitry 11 is configured to obtain (via the sensor interface 13 or communication interface 14) a drivable area of a surrounding environment of the vehicle 1. The drivable area may for example be defined by road boundaries as detected and determined by the perception system 66 and the associated sensor devices 66a-c. However, in alternative embodiments (not shown) the control device 10 may receive raw data directly from one or more sensor devices 66a-c, and the determination of a drivable area may be performed by a dedicated module of the control device 10 based on the received sensor data. The control circuitry 11 is further configured to generate a path within the drivable area for a time step t based on a predefined set of characteristics for the path and a predefined set of constraints. The set of constraints comprise at least one constraint based on a current pose of the vehicle. The current pose of the vehicle may be obtained from any suitable peripheral system (such as e.g. a localization system 65 or an IMU 69) of the vehicle 1.

Further, the vehicle 1 may be connected to external network(s) 62 via for instance a wireless link (e.g. for retrieving map data). The same or some other wireless link may be used to communicate with other vehicles in the vicinity of the vehicle or with local infrastructure elements. Cellular communication technologies may be used for long range communication such as to external networks and if the cellular communication technology used have low latency it may also be used for communication between vehicles, vehicle to vehicle (V2V), and/or vehicle to infrastructure, V2X. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802.11 based solutions. ETSI is working on cellular standards for vehicle communication and for instance 5G is considered as a suitable solution due to the low latency and efficient handling of high bandwidths and communication channels.

In summary, in order to alleviate the problem of failed convergence to a target path of a vehicle, a constraint dependent on the current pose of the vehicle is introduced. In more detail, the "vehicle pose constraint" has the following attributes.

A narrow constraint that extends along a longitudinal centre axis of the vehicle (i.e. an axis intersecting a vehicle centre point such as a centre of rear axis) towards the front and back of the vehicle is formed. Moreover, as an option this constraint is allowed to be violated only when the optimized path cannot be found without the violation, alternatively the spacing between the lateral boundaries (defining the constraint) may be increased until a solution is found. By introducing the constraint, the optimized target path aligns with vehicle pose. Thus, when it is tracked by a controller, smooth vehicle motion is realized.

Moreover, the proposed path planning approach that directly optimizes a mathematical function representing the path (without relying on sequence of control input) is computationally efficient because there are a smaller number of parameters to be optimized. This invention provides such approach with robustness where automated driving mode can be initiated from any initial ego vehicle poses while realizing smooth vehicle motion.

The present disclosure has been presented above with reference to specific embodiments. However, other embodiments than the above described are possible and within the scope of the disclosure. Different method steps than those described above, performing the method by hardware or software, may be provided within the scope of the disclosure. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the control device 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be appreciated that the sensor interface 13 may also provide the possibility to acquire sensor data directly or via dedicated sensor control circuitry 66 in the vehicle. The communication/antenna interface 14 may further provide the possibility to send output to a remote location (e.g. remote operator or control centre) by means of the antenna 68. Moreover, some sensors in the vehicle may communicate with the control device 10 using a local network setup, such as CAN bus, I2C, Ethernet, optical fibres, and so on. The communication interface 14 may be arranged to communicate with other control functions of the vehicle and may thus be seen as control interface also; however, a separate control interface (not shown) may be provided. Local communication within the vehicle may also be of a wireless type with protocols such as WiFi, LoRa, Zigbee, Bluetooth, or similar mid/short range technologies.

Accordingly, it should be understood that parts of the described solution may be implemented either in the vehicle, in a system located external the vehicle, or in a combination of internal and external the vehicle; for instance in a server in communication with the vehicle, a so called cloud solution. For instance, sensor data may be sent to an external system and that system performs the steps to determine a drivable area of a surrounding environment of the vehicle 1. The different features and steps of the embodiments may be combined in other combinations than those described.

## Claims

1. A method (400, 500) for path planning for an autonomous or semi-autonomous vehicle, the method comprising:

   obtaining (402a-d) a drivable area of a surrounding environment of the vehicle;
   generating (403a-d, 502) a path within the drivable area at a time step t based on a predefined set of characteristics for the path, and a predefined set of constraints, wherein the predefined set of characteristics is related to comfort aspects of the path, and wherein the predefined set of characteristics comprises at least one of a path smoothness level, a distance to lane centre, and a length of the path;

wherein the predefined set of constraints comprises at least one constraint based on a current pose of the vehicle at the time step t;

wherein the step of generating (403a-d, 502) a path within the drivable area at the time step t comprises:

computing (503) a cost function, wherein the cost function is a mathematical representation of the predefined set of characteristics for the path,

computing (506) the predefined set of constraints, wherein the predefined set of constraints further comprise at least one constraint based on a boundary of the drivable area and at least one constraint based on vehicle characteristics,

solving (511) an optimization problem based on the computed cost function and the computed predefined set of constraints, and

forming (512) the path based on the solved optimization problem;

**characterized in that** the at least one constraint based on the current pose of the vehicle comprises two lateral boundaries extending along and in parallel with a longitudinal axis of the vehicle at a first predefined lateral distance from the longitudinal axis; and

**in that** an area between the two lateral boundaries defines an allowable area within which at least a portion of the path at the time step t is allowed to be formed.

2.  The method (400, 500) according to claim 1, further comprising:
    if the portion of the path at time step t cannot be formed within the allowable area between the two lateral boundaries, increasing (509) the first predefined distance until the portion of the path can be formed within the allowable area.

3.  The method (400, 500) according to any one of claims 1-2, wherein the two lateral boundaries have a longitudinal extension within a second predefined distance from at least one outer edge of the vehicle.

4.  The method (400, 500) according to any one of the preceding claims, wherein the predefined set of constraints further comprise at least one of a minimum turning radius of the vehicle, a length of the vehicle, a width of the vehicle, a height of the vehicle, a ground clearance of the vehicle, and at least one drivable area boundary.

5.  A computer-readable storage medium storing one or more programs configured to be executed by one or more processors of a vehicle control system, the one or more programs comprising instructions for performing the method (400, 500) according to any one of the preceding claims.

6.  A control device (10) for path planning for an autonomous or semi-autonomous vehicle (1), the control device comprising control circuitry (11) configured to:

    obtain a drivable area of a surrounding environment (4) of the vehicle (1);
    generate a path (2) within the drivable area at a time step t based on a predefined set of characteristics for the path (2), and a predefined set of constraints, wherein the predefined set of characteristics is related to comfort aspects of the path, and wherein the predefined set of characteristics comprises at least one of a path smoothness level, a distance to lane centre, and a length of the path:
    wherein the predefined set of constraints comprises at least one constraint (7, 8) based on a current pose of the vehicle (1) at the time step t;
    wherein the control circuitry (11) is further configured to generate the path (2) within the drivable area at a time step t by:

    computing a cost function comprising the predefined set of characteristics for the path (2);
    computing the predefined set of constraints, wherein the predefined set of constraints further comprise at least one constraint based on a boundary of the drivable area and at least one constraint based on vehicle characteristics;
    solving an optimization problem based on the computed cost function and the computed predefined set of constraints;
    forming the path (2) based on the solved optimization problem;

**characterized in that** the at least one constraint (7, 8) based on the current pose of the vehicle comprises two lateral boundaries (7, 8) extending along and in parallel with a longitudinal axis (21) of the vehicle at a first predefined distance (24, 25) from the longitudinal axis; and
that an area between the two lateral boundaries defines an allowable area within which at least a portion of the path at the time step t is allowed to be formed.

7. A vehicle (1) comprising:

a perception system (67) comprising at least one sensor (66a-c) for monitoring a surrounding environment of the vehicle;
a control device (10) according to claim 6.

**Patentansprüche**

1. Verfahren (400, 500) zur Wegplanung für ein autonomes oder halbautonomes Fahrzeug, wobei das Verfahren Folgendes umfasst:

Erlangen (402a-d) eines befahrbaren Bereichs einer umliegenden Umgebung des Fahrzeugs;
Erzeugen (403a-d, 502) eines Wegs innerhalb des befahrbaren Bereichs bei einem Zeitschritt t auf Grundlage eines vordefinierten Satzes von Eigenschaften für den Weg und eines vordefinierten Satzes von Nebenbedingungen, wobei der vordefinierte Satz von Eigenschaften mit Komfortaspekten des Wegs in Zusammenhang steht und wobei der vordefinierte Satz von Eigenschaften mindestens eines von einem Wegebenheitsniveau, einem Abstand zur Fahrstreifenmitte und einer Länge des Wegs umfasst;
wobei der vordefinierte Satz von Nebenbedingungen mindestens eine Nebenbedingung auf Grundlage einer derzeitigen Pose des Fahrzeugs bei dem Zeitschritt t umfasst;
wobei der Schritt zum Erzeugen (403a-d, 502) eines Wegs innerhalb des befahrbaren Bereichs bei dem Zeitschritt t Folgendes umfasst:

Berechnen (503) einer Kostenfunktion, wobei die Kostenfunktion eine mathematische Darstellung des vordefinierten Satzes von Eigenschaften für den Weg ist,
Berechnen (506) des vordefinierten Satzes von Nebenbedingungen, wobei der vordefinierte Satz von Nebenbedingungen ferner mindestens eine Nebenbedingung auf Grundlage einer Begrenzung des befahrbaren Bereichs und mindestens eine Nebenbedingung auf Grundlage von Fahrzeugeigenschaften umfasst,
Lösen (511) eines Optimierungsproblems auf Grundlage der berechneten Kostenfunktion und des berechneten vordefinierten Satzes von Nebenbedingungen und
Bilden (512) des Wegs auf Grundlage des gelösten Optimierungsproblems;

**dadurch gekennzeichnet, dass** die mindestens eine Nebenbedingung auf Grundlage der derzeitigen Pose des Fahrzeugs zwei seitliche Begrenzungen umfasst, die sich entlang und parallel zu einer Längsachse des Fahrzeugs in einem ersten vordefinierten seitlichen Abstand von der Längsachse erstrecken; und
dass ein Bereich zwischen den zwei seitlichen Begrenzungen einen zulässigen Bereich definiert, innerhalb dessen zugelassen ist, dass mindestens ein Abschnitt des Wegs bei dem Zeitschritt t gebildet wird.

2. Verfahren (400, 500) nach Anspruch 1, ferner umfassend:
falls der Abschnitt des Wegs bei dem Zeitschritt t nicht innerhalb des zulässigen Bereichs zwischen den zwei seitlichen Begrenzungen gebildet werden kann, Erhöhen (509) des ersten vordefinierten Abstands, bis der Abschnitt des Wegs innerhalb des zulässigen Bereichs gebildet werden kann.

3. Verfahren (400, 500) nach einem der Ansprüche 1-2, wobei die zwei seitlichen Begrenzungen eine Längserstreckung innerhalb eines zweiten vordefinierten Abstands von mindestens einer Außenkante des Fahrzeugs aufweisen.

4. Verfahren (400, 500) nach einem der vorhergehenden Ansprüche, wobei der vordefinierte Satz von Nebenbedingungen ferner mindestens eines von einem minimalen Wenderadius des Fahrzeugs, einer Länge des Fahrzeugs, einer Breite des Fahrzeugs, einer Höhe des Fahrzeugs, einer Bodenfreiheit des Fahrzeugs und mindestens einer Begrenzung des befahrbaren Bereichs umfasst.

5. Computerlesbares Speichermedium, das ein oder mehrere Programme speichert, die dazu konfiguriert sind, durch einen oder mehrere Prozessoren eines Fahrzeugsteuersystems ausgeführt zu werden, wobei das eine oder die mehreren Programme Anweisungen zum Durchführen des Verfahrens (400, 500) nach einem der vorhergehenden Ansprüche umfassen.

6. Steuervorrichtung (10) zur Wegplanung für ein autonomes oder halbautonomes Fahrzeug (1), wobei die Steuervorrichtung eine Steuerschaltung (11) umfasst, die zu Folgendem konfiguriert ist:

Erlangen eines befahrbaren Bereichs einer umliegenden Umgebung (4) des Fahrzeugs (1);
Erzeugen eines Wegs (2) innerhalb des befahrbaren Bereichs bei einem Zeitschritt t auf Grundlage eines vordefinierten Satzes von Eigenschaften für den Weg (2) und eines vordefinierten Satzes von Nebenbedingungen, wobei der vordefinierte Satz von Eigenschaften mit Komfortaspekten des Wegs in Zusammenhang steht und wobei der vordefinierte Satz von Eigenschaften mindestens eines von einem Wegebenheitsniveau, einem Abstand zur Fahrstreifenmitte und einer Länge des Wegs umfasst;
wobei der vordefinierte Satz von Nebenbedingungen mindestens eine Nebenbedingung (7, 8) auf Grundlage einer derzeitigen Pose des Fahrzeugs (1) bei dem Zeitschritt t umfasst;
wobei die Steuerschaltung (11) ferner dazu konfiguriert ist, den Weg (2) innerhalb des befahrbaren Bereichs bei einem Zeitschritt t durch Folgendes zu erzeugen:

Berechnen einer Kostenfunktion, die den vordefinierten Satz von Eigenschaften für den Weg (2) umfasst;
Berechnen des vordefinierten Satzes von Nebenbedingungen, wobei der vordefinierte Satz von Nebenbedingungen ferner mindestens eine Nebenbedingung auf Grundlage einer Begrenzung des befahrbaren Bereichs und mindestens eine Nebenbedingung auf Grundlage von Fahrzeugeigenschaften umfasst;
Lösen eines Optimierungsproblems auf Grundlage der berechneten Kostenfunktion und des berechneten vordefinierten Satzes von Nebenbedingungen;
Bilden des Wegs (2) auf Grundlage des gelösten Optimierungsproblems;

**dadurch gekennzeichnet, dass** die mindestens eine Nebenbedingung (7, 8) auf Grundlage der derzeitigen Pose des Fahrzeugs zwei seitliche Begrenzungen (7, 8) umfasst, die sich entlang und parallel zu einer Längsachse (21) des Fahrzeugs in einem ersten vordefinierten Abstand (24, 25) von der Längsachse erstrecken; und dass ein Bereich zwischen den zwei seitlichen Begrenzungen einen zulässigen Bereich definiert, innerhalb dessen zugelassen ist, dass mindestens ein Abschnitt des Wegs bei dem Zeitschritt t gebildet wird.

7. Fahrzeug (1), umfassend:

ein Wahrnehmungssystem (67), das mindestens einen Sensor (66a-c) zum Überwachen einer umliegenden Umgebung des Fahrzeugs umfasst;
eine Steuervorrichtung (10) nach Anspruch 6.

**Revendications**

1. Procédé (400, 500) de planification de trajectoire pour un véhicule autonome ou semi-autonome, le procédé comprenant :

l'obtention (402a-d) d'une zone de conduite d'un environnement proche du véhicule ;
la génération (403a-d, 502) d'une trajectoire à l'intérieur de la zone de conduite à un instant t sur la base d'un ensemble prédéfini de caractéristiques pour la trajectoire, et un ensemble prédéfini de contraintes, dans lequel l'ensemble prédéfini de caractéristiques est lié à des aspects de confort de la trajectoire, et dans lequel l'ensemble prédéfini de caractéristiques comprend au moins l'un parmi un niveau de régularité de trajectoire, une distance jusqu'au centre de la voie et une longueur de la trajectoire ;
dans lequel l'ensemble prédéfini de contraintes comprend au moins une contrainte basée sur une position actuelle du véhicule à l'instant t ;
dans lequel l'étape de génération (403a-d, 502) d'une trajectoire à l'intérieur de la zone de conduite à l'instant t comprend :

le calcul (503) d'une fonction de coût, dans lequel la fonction de coût est une représentation mathématique de l'ensemble prédéfini de caractéristiques pour la trajectoire,
le calcul (506) de l'ensemble prédéfini de contraintes, dans lequel l'ensemble prédéfini de contraintes comprend en outre au moins une contrainte basée sur une limite de la zone de conduite et au moins une contrainte basée sur des caractéristiques de véhicule,

la résolution (511) d'un problème d'optimisation basé sur la fonction de coût calculée et de l'ensemble prédéfini de contraintes calculé, et

la formation (512) de la trajectoire sur la base du problème d'optimisation résolu ;

**caractérisé en ce que** l'au moins une contrainte basée sur la position actuelle du véhicule comprend deux limites latérales s'étendant le long d'un axe longitudinal du véhicule et parallèlement à celui-ci à une première distance latérale prédéfinie de l'axe longitudinal ; et

**en ce qu'**une zone entre les deux limites latérales définit une zone autorisée à l'intérieur de laquelle au moins une partie de la trajectoire à l'instant t peut être formée.

2. Procédé (400, 500) selon la revendication 1, comprenant en outre :

si la partie de la trajectoire à l'instant t ne peut pas être formée à l'intérieur de la zone autorisée entre les deux limites latérales, l'augmentation (509) de la première distance prédéfinie jusqu'à ce que la partie de la trajectoire puisse être formée à l'intérieur de la zone autorisée.

3. Procédé (400, 500) selon l'une quelconque des revendications 1 et 2, dans lequel les deux limites latérales ont une extension longitudinale à l'intérieur d'une seconde distance prédéfinie à partir d'au moins un bord extérieur du véhicule.

4. Procédé (400, 500) selon l'une quelconque des revendications précédentes, dans lequel l'ensemble prédéfini de contraintes comprend en outre au moins l'un parmi un rayon de braquage minimum du véhicule, une longueur du véhicule, une largeur du véhicule, une hauteur du véhicule, une garde au sol du véhicule et au moins une limite de zone de conduite.

5. Support de stockage lisible par ordinateur stockant un ou plusieurs programmes configurés pour être exécutés par un ou plusieurs processeurs d'un système de commande de véhicule, le ou les plusieurs programmes comprenant des instructions pour la mise en œuvre du procédé (400, 500) selon l'une quelconque des revendications précédentes.

6. Dispositif de commande (10) pour la planification de trajectoire pour un véhicule autonome ou semi-autonome (1), le dispositif de commande comprenant un circuit de commande (11) configuré pour :

obtenir une zone de conduite d'un environnement environnant (4) du véhicule (1) ;

générer une trajectoire (2) à l'intérieur de la zone de conduite à l'instant t sur la base d'un ensemble prédéfini de caractéristiques pour la trajectoire (2), et d'un ensemble prédéfini de contraintes, dans lequel l'ensemble prédéfini de caractéristiques est lié à des aspects de confort de la trajectoire, et dans lequel l'ensemble prédéfini de caractéristiques comprend

au moins l'un parmi un niveau de régularité de la trajectoire, une distance jusqu'au centre de la voie, et une longueur de la trajectoire :

dans lequel l'ensemble prédéfini de contraintes comprend au moins une contrainte (7, 8) basée sur une position actuelle du véhicule (1) à l'instant t ;

dans lequel le circuit de commande (11) est en outre configuré pour générer la trajectoire (2) à l'intérieur de la zone de conduite à l'instant t par :

le calcul d'une fonction de coût comprenant l'ensemble prédéfini de caractéristiques pour la trajectoire (2) ;

le calcul de l'ensemble prédéfini de contraintes, dans lequel l'ensemble prédéfini de contraintes comprend en outre au moins une contrainte basée sur une limite de la zone de conduite et au moins une contrainte basée sur des caractéristiques de véhicule ;

la résolution d'un problème d'optimisation sur la base de la fonction de coût calculée et de l'ensemble prédéfini de contraintes calculé ;

la formation de la trajectoire (2) sur la base du problème d'optimisation résolu ;

**caractérisé en ce que** l'au moins une contrainte (7, 8) basée sur la position actuelle du véhicule comprend deux limites latérales (7, 8) s'étendant le long d'un axe longitudinal (21) du véhicule et parallèlement à celui-ci à une première distance prédéfinie (24, 25) à partir de l'axe longitudinal ; et

**en ce qu'**une zone entre les deux limites latérales définit une zone autorisée à l'intérieur de laquelle au moins une partie de la trajectoire à l'instant t peut être formée.

7. Véhicule (1) comprenant :

un système de perception (67) comprenant au moins un capteur (66a-c) pour la surveillance d'un environnement immédiat du véhicule ;
un dispositif de commande (10) selon la revendication 6.

Fig. 1 (Prior art)

Fig. 2

EP 3 786 586 B1

(a)

(b)

(c) - (Prior art)

(d) – (Prior art)

Fig. 3

EP 3 786 586 B1

*Fig. 4*

EP 3 786 586 B1

*Fig. 5*

500

502 Generate path

501 Sensor data

503 Compute cost function matrix and vector

506 Compute constraints matrix and vector

511 Solve optimization problem

512 Construct path

504 Compute base matrix and vector (Q, c)

505 Form augmented matrix and vector ($Q_a$, $c_a$)

507 Derive vehicle pose constraint

510 Form augmented constraint matrix and vector ($A_a$, $b_a$)

508 Get lateral boundaries extended from vehicle center along vehicle's longitudinal axis

509 Shift lateral boundaries left/right by a constant magnitude equidistantly from vehicle's longitudinal axis

Fig. 6

**REFERENCES CITED IN THE DESCRIPTION**

**Patent documents cited in the description**

- US 2018356819 A1
- US 9969386 B1
- WO 2019043833 A1
- US 2019011910 A1